# EUROPEAN PATENT SPECIFICATION

(11) **EP 0 604 198 B1**
(45) Date of publication and mention of the grant of the patent: **27.10.2004**
(21) Application number: 93310393.9
(22) Date of filing: 21.12.1993
(51) Int. Cl.: B01D 53/86, B01D 53/04

(54) **Method for treating ammonia**
Verfahren zur Behandlung von Ammoniak
Procédé de traitement d'ammoniac

(30) Priority: 21.12.1992 JP 33994092
(43) Date of publication of application: 29.06.1994
(73) Proprietor: MITSUBISHI JUKOGYO KABUSHIKI KAISHA, Tokyo 100 (JP)
(72) Inventor: Morii, Atsushi, Nagasaki Shipyard & Mach. Wks., Nagasaki-shi, Nagasaki-ken (JP); Naito, Osamu, Nagasaki Shipyard & Mach. Wks., Nagasaki-shi, Nagasaki-ken (JP); Onishi, Toshiyuki, Nagasaki Shipyard & Mach. Wks., Nagasaki-shi, Nagasaki-ken (JP); Nakamura, Hitoshi, Nagasaki Shipyard & Mach. Wks., Nagasaki-shi, Nagasaki-ken (JP); Iida, Kouzo, Hiroshima R & D Center, Nishi-ku, Hiroshima-shi, Hiroshima-ken (JP)
(74) Representative: Ackroyd, Robert

(56) References cited:
- EP-A- 0 261 610
- EP-A- 0 268 118
- EP-A- 0 290 947
- EP-A- 0 567 964
- DATABASE WPI Section Ch, Week 7849, Derwent Publications Ltd., London, GB; Class A35, AN 78-88837A & JP-A-53 125 962 (MITSUBISHI HEAVY IND KK) 2 November 1978
- DATABASE WPI Section Ch, Week 7833, Derwent Publications Ltd., London, GB; Class E35, AN 78-59242A & JP-A-53 077 872 (HITACHI PLANT ENG CONST) 10 July 1978
- DATABASE WPI Section Ch, Week 7630, Derwent Publications Ltd., London, GB; Class E35, AN 76-56560X & JP-A-50 026 797 (GOTO T) 19 March 1975
- PATENT ABSTRACTS OF JAPAN vol. 007, no. 039 (C-151)17 February 1983 & JP-A-57 190 640 (HITACHI ZOSEN KK) 24 November 1982
- PATENT ABSTRACTS OF JAPAN vol. 004, no. 050 (C-007)16 April 1980 & JP-A-55 023 069 (DAIDO STEEL CO LTD) 19 February 1980

## Description

The present invention relates to a method for treating ammonia leaked on the downstream side of a dry denitration device using ammonia as a reducing agent.

At present, no method for removing ammonia (hereinafter referred to as "NH₃") from an exhaust gas on the downstream side of a dry denitration device using NH₃ as a reducing agent has been put to a practical use yet. In this connection, as ideas, there has been conceived, for example in JP-A-2-191527, a system of installing an NH₃ decomposition catalyst layer on the downstream side of a denitration device.

In the above-mentioned system of installing the NH₃ decomposition catalyst layer on the downstream side of the denitration device, the NH₃ decomposition catalyst has an extremely limited tolerance to variations in the operation temperature, and therefore, in the case that, for example, as in a boiler, temperature changes within the range of from about 200 to 450°C occur between a low load and a steady load at the outlet of the denitration device, it is difficult to maintain a consistent level of NH₃ decomposition throughout the load range.

EP-A-0290947 describes a method for removing ammonia from an exhaust gas by supplying the exhaust gas to a catalyst which oxidises the ammonia to nitrogen and water.

JP-A-57-190640 discloses an apparatus for removing NOₓ from an exhaust gas. The apparatus comprises a rotating drum charged with a denitration catalyst, the drum being divided by partition plates into an adsorbing zone and a desorbing zone. An exhaust gas mixture of NH₃ and NOₓ is supplied to the drum in the adsorbing zone. After denitration of the mixture, NH₃ is released in the desorbing zone after rotation of the drum. This document does not discuss the separation and decomposition of NH₃; nor does it discuss the effect of temperatures upon NH₃ adsorption and desorption.

JP-A-50-026797 discloses a process for removing ammonia from waste gas which comprises passing an ammonia-containing exhaust gas stream through compartments containing an ammonia adsorbent, heating the adsorbent to release the ammonia therefrom; and decomposing the ammonia by passing it through an oxidising catalyst. This document discloses a temperature of between 150 and 250°C for release of ammonia from the adsorbent material.

If NH₃ is adsorbed at a low temperature from the said exhaust gases and then desorbed by raising the temperature, and NH₃-containing (desorption) gas is returned to the inlet of the denitration device, the NH₃ concentration in the desorption gas is extremely high relative to the exhaust gas so that when the desorption gas is directly returned to the inlet of the denitration device, the NH₃ concentration at the inlet of the denitration device is transiently substantially increased, which results in the NH₃ concentration at the outlet of the denitration device also being disadvantageously increased.

An English-language abstract of JP-A-32-38019 relates to a process for removing ammonia from a reductive gas by adsorption on zeolite.

It is an object of the present invention to provide a method capable of avoiding the above-mentioned disadvantages, i.e., a method by which the NH₃ concentration at the outlet of a denitration device can be stably controlled throughout the load range.

Accordingly the present invention provides a method of reducing the level of or removing ammonia from the exhaust gas of a dry denitration process which takes place in a denitration zone and which uses ammonia at an elevated temperature as a reducing agent, comprising
contacting the ammonia-containing exhaust gas at a temperature of 200°C or less in an adsorption zone with an ammonia-adsorbent material whereby to adsorb ammonia in/on the adsorbent material,
desorbing the adsorbed ammonia from the ammonia-adsorbent material at a temperature of at least 300°C, whereby to release the ammonia from the adsorbent material, and
decomposing the released ammonia by contact thereof with an ammonia-decomposition catalyst in a decomposition zone separate from the denitration and adsorption zones.

A plurality of adsorption zones may be used when, except during start up, at least one of the zones is adsorbing ammonia from the ammonia-containing exhaust gas and at least one of the zones is concurrently being desorbed of adsorbed ammonia and the desorbed ammonia therefrom passed through a decompisition zone.

The plurality of adsorption zones may be connected to the ammonia-containing exhaust gas stream in parallel to each other, each adsorption zone being periodically disconnected for the purpose of desorbing the ammonia adsorbed therein. In one embodiment the present invention provides a method for removing ammonia from an exhaust gas on the downstream side of a dry denitration device which uses ammonia at an elevated temperature as a reducing agent, comprising the steps of adsorbing/removing ammonia in the exhaust gas in an ammonia adsorbent-containing means disposed at a position on the downstream side of the dry denitration device until the ammonia adsorbent is substantially saturated with ammonia, where the exhaust gas temperature is 200°C or less, heating, up to a temperature of 300°C or more, the saturated ammonia adsorbent in which ammonia is adsorbed to desorb ammonia; and then decomposing the desorbed ammonia in an ammonia decomposition catalyst-filled means.

In another embodiment the present invention is directed to a method for treating ammonia in an exhaust gas on the downstream side of a dry denitration device using ammonia as a reducing agent which comprises the step of alternately carrying out ammonia adsorption and ammonia desorption/decomposition to continuously treat ammonia in the exhaust gas in a plurality of constitutional units parallelly connected on an exhaust gas line, the aforesaid constitutional units being constituted so as to carry out the steps of adsorbing/removing ammonia in an ammonia adsorbent-filled tower disposed at a position, where an exhaust gas temperature is 200°C or less, on the downstream side of the dry denitration device; heating, up to a temperature of 300°C or more, the ammonia adsorbent-filled tower on which ammonia is adsorbed in a saturated state, to desorb ammonia; and decomposing ammonia in an ammonia decomposition catalyst-filled tower disposed on a desorption ammonia gas line.

In the present invention, usable examples of the NH₃ adsorbent with which the adsorbent-filled tower is filled include titanium oxide, alumina and zeolite. In addition, usable examples of the NH₃ decomposition catalyst with which the ammonia decomposition catalyst-filled tower is filled include active metals such as copper, cobalt, nickel and iron supported on zeolite.

The NH₃ adsorbent-filled tower is disposed at the position, where the exhaust gas temperature in a main flue is 200°C or less, on the downstream side of the dry denitration device, and therefore NH₃ in the exhaust gas in the main flue on the downstream side of the dry denitration device can be stably reduced within the range of from the high load to the low load of an exhaust gas generation source. Furthermore, NH₃ adsorbed by the NH₃ adsorbent-filled tower is heated up to a temperature of 300°C or more to desorb NH₃, and the desorbed NH₃ is led into the desorption NH₃ gas line and then decomposed in the decomposition catalyst-filled tower provided on the line. Accordingly, even when the exhaust gas discharged from the decomposition catalyst-filled tower is returned to the exhaust gas generation source, the NH₃ concentration in the main flue does not increase.

Moreover, according to the above-mentioned second invention, the above-mentioned treatment can be continuously carried out.

The invention will be further described by reference to the accompanying drawings, in which

Fig. 1 is an illustrative view comparing an embodiment of the present invention with a comparative example.

Fig. 2 is a graph comparing the effect of the embodiment in Fig. 1 with that of the comparative example.

Fig. 3 is a graph showing the temperature dependence of the amount of ammonia adsorbed by an ammonia adsorbent which can be used in the present invention.

Fig. 4 is a graph showing the temperature dependence of an ammonia decomposition ratio and an NOₓ generation ratio of an ammonia decomposition catalyst which can be used in the present invention.

The NH₃ adsorption properties of an adsorbent were confirmed in Experimental Example 1, and NH₃ decomposition properties of the adsorbent were confirmed in Experimental Example 2.

### Experimental Example 1

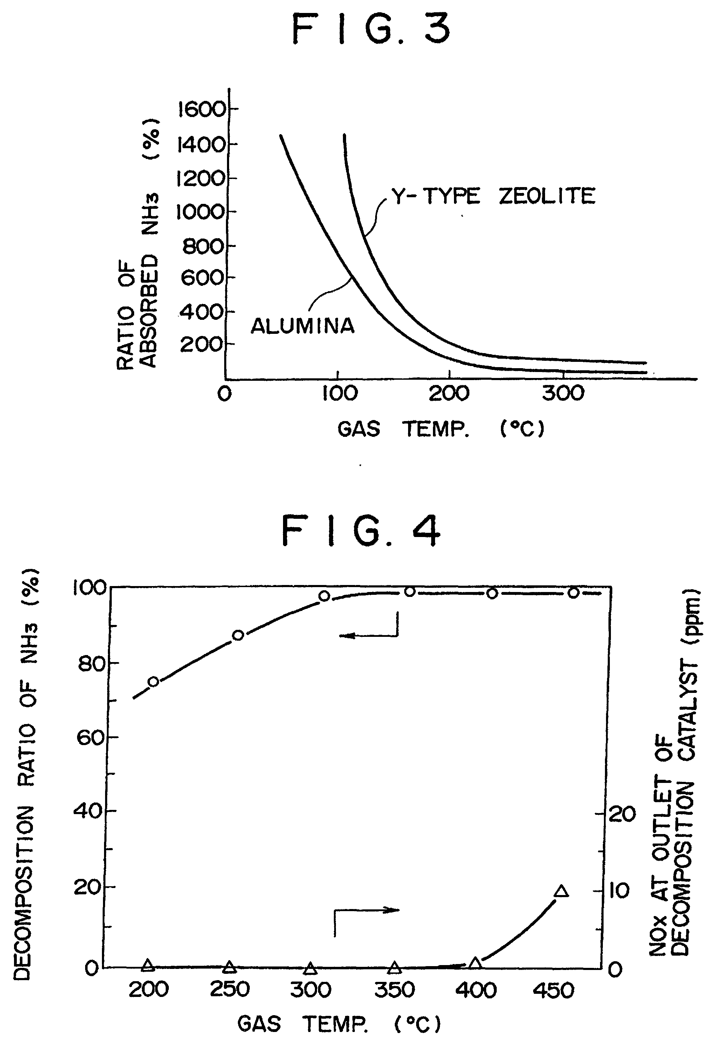

An NH₃ adsorbent comprising 80% of Y-type zeolite and 20% of a molding auxiliary and another NH₃ adsorbent comprising 80% of alumina and 20% of a molding auxiliary were molded into pellets having a diameter of 3 mm, and their adsorption properties were confirmed under the following conditions. As a result, it was apparent that the concentration of adsorbed NH₃ (a ratio of the amount of adsorbed NH₃) increased at 200°C or less in both the cases, as shown in Fig. 3.
- Gas flow rate:: 400 N liters/hr
- Temperature:: swung between 100°C and 300°C

| Composition of the exhaust gas: | |
|---|---|
| NOₓ | 1 ppm |
| NH₃ | 100 ppm |
| O₂ | 14% |
| H₂O | 5% |
| N₂ | balance |

### Experimental Example 2

An NH₃ decomposition catalyst comprising 60% of silica, 30% of alumina and 7% of copper and a balance of a molding auxiliary was molded into a honeycomb shape having a pitch of 5 mm, and decomposition properties of the catalyst were measured under the following conditions. The results are shown in Fig. 4. It is apparent from the results of Fig. 4 that the decomposition activity (decomposition ratio) of NH₃ was high at a gas temperature of from 300 to 400°C, but at 300°C or less, the decomposition activity is low. At 400°C, the generation of NOₓ occurred, and this generation increased with the rise of the temperature. Therefore, it was understood that the direct installation of an NH₃ decomposition catalyst tower in a flue on the downstream side of a denitration device using NH₃ as a reducing agent was not preferable to decompose/remove NH₃ in an exhaust gas on the downstream side of the denitration device.
- SV value:: about 1,600 H⁻¹
- Gas flow rate:: 220 N liters/hr

| Composition of the exhaust gas: | |
|---|---|
| NH₃ | 20 ppm |
| CO₂ | 7% |
| O₂ | 14.7% |
| H₂O | 6% |
| N₂ | balance |

On the basis of the above-mentioned results, the present invention has been carried out by the following procedures.

### Example

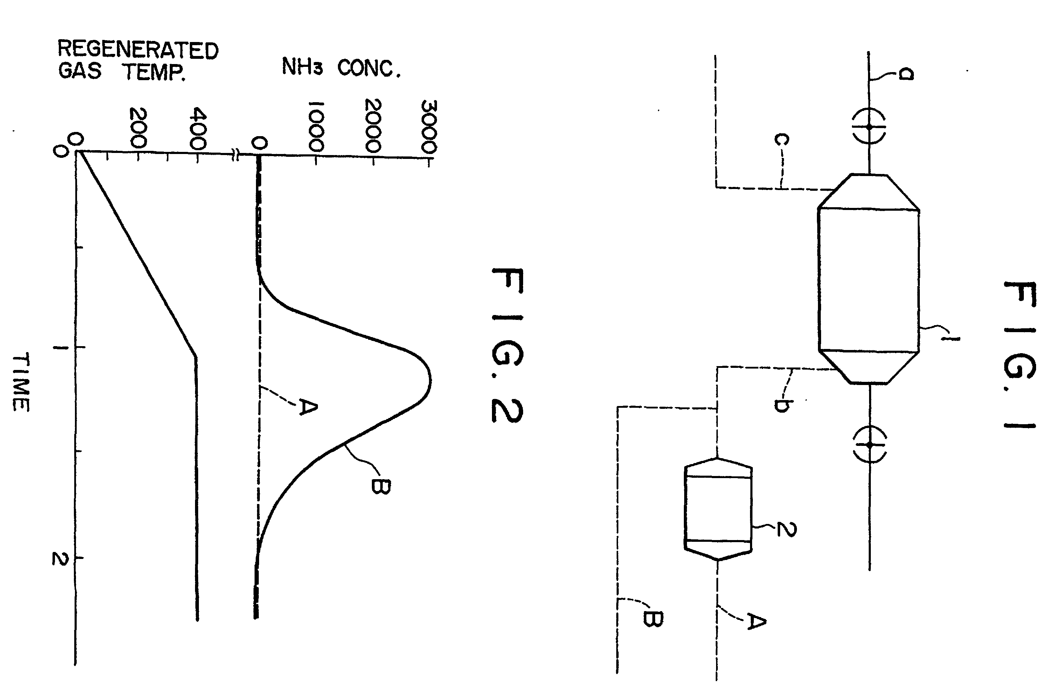

As shown in Fig. 1, an NH₃ adsorbent-filled tower 1 filled with an NH₃ adsorbent comprising 80% of alumina and 20% of a molding auxiliary was provided on an exhaust gas line a of an exhaust gas generation source (not shown), and on a desorption line b extending from the NH₃ adsorbent filled tower 1, there were provided a system A in which an NH₃ decomposition catalyst-filled tower 2 filled with an NH₃ decomposition catalyst comprising 60% of silica, 30% of alumina, 7% of copper and a balance of a molding auxiliary was installed, and another system B for comparison in which the catalyst-filled tower was not installed.

An exhaust gas having the same composition as in Experimental Example 1 was fed through the exhaust gas line a, and NH₃ was adsorbed at an exhaust gas temperature of 100°C to a saturated state in the NH₃ adsorbent-filled tower 1. Afterwards, the feed of the exhaust gas was stopped, and a reproduced gas was heated in a manner shown in Fig. 2 and then fed through a reproduced gas line C. Afterwards, the change of the NH₃ concentration in the desorption line b was confirmed, and as a result, the results shown in Fig. 2 were obtained.

That is, in the system B of the desorption line b, the rise of the NH₃ concentration was observed, but in the system A in which the NH₃ decomposition catalyst-filled tower 2 was installed, any rise of the NH₃ concentration was not observed, whereby it was confirmed that the decomposition/removal of NH₃ in the exhaust gas was carried out.

In this connection, the gas amount in the desorption line b was in the range of from 1/50 to 1/100 of the exhaust gas amount in the exhaust gas line a, and therefore it was understood that a large amount of the catalyst could be decreased, in contrast to the case where the NH₃ decomposition catalyst-filled tower 2 was directly installed on the exhaust gas line a.

When the present invention is applied to a real plant, a plurality of constitutional units shown in Fig. 1 comprising the NH₃ adsorbent-filling tower 1 and the NH₃ decomposition catalyst-filled tower 2 may be parallelly connected on the exhaust gas line a, and the adsorption of NH₃ and the decomposition/removal of NH₃ are alternately carried out, whereby in the dry denitration device, NH₃ in the exhaust gas on the downstream side of the device can be continuously treated.

As is apparent from the foregoing, according to the present invention, an NH₃ concentration in an exhaust gas can be stably inhibited to a low level even at the time of the load change of an exhaust gas generation source.

## Claims

1. A method of reducing the level of or' removing ammonia from the exhaust gas of a dry denitration process which takes place in a denitration zone and which uses ammonia at an elevated temperature as a reducing agent, comprising
contacting the ammonia-containing exhaust gas at a temperature of 200°C or less in an adsorption zone with an ammonia-adsorbent material whereby to adsorb ammonia in/on the adsorbent material,
desorbing the adsorbed ammonia from the ammonia-adsorbent material at a temperature of at least 300°C, whereby to release the ammonia from the adsorbent material, and
decomposing the released ammonia by contact thereof with an ammonia-decomposition catalyst in a decomposition zone separate from the denitration and adsorption zones.

2. A method according to claim 1, in which a plurality of adsorption zones are used, at least one of the zones adsorbing ammonia from the ammonia-containing exhaust gas whilst at least one other of the zones is concurrently being desorbed of adsorbed ammonia and the desorbed ammonia therefrom is passed through a decomposition zone.

3. A method according to claim 2, in which the adsorption zones are connected to the exhaust gas stream in parallel to each other, each adsorption zone being periodically disconnected from the exhaust gas stream for the purpose of desorption.

4. A method according to any of claims 1 to 3, in which the decomposition of the desorbed ammonia is carried out at a temperature of 300°C to 400°C.

5. A method according to any of claims 1 to 4, in which the or each adsorption zone is' taken to the point of saturation with ammonia before desorption is effected.

## Patentansprüche

1. Verfahren zur Reduzierung des Anteils oder zur Entfernung von Ammoniak aus den Abgasen eines Trockendenitrierungsprozesses, der in einer Denitrierungszone stattfindet, und bei dem Ammoniak bei einer erhöhten Temperatur als Reduktionsmittel verwendet wird, welches aufweist:
Kontaktieren des ammoniakhaltigen Abgases bei einer Temperatur von 200°C oder weniger in einer Adsorptionszone mit einem Ammoniak adsorbierenden Material, um dadurch den Ammoniak in oder an das adsorbierende Material zu adsorbieren,
Desorbieren des adsorbierten Ammoniaks vom Ammoniak adsorbierenden Material bei einer Temperatur von mindestens 300°C, um dadurch den Ammoniak aus dem adsorbierenden Material zu entfernen, und
Zersetzen des freigesetzten Ammoniaks durch Kontakt desselben mit einem Ammoniak-Zersetzungskatalysator in einer Zersetzungszone, welche von der Denitrierungszone und der Adsorptionszone getrennt ist.

2. Verfahren nach Anspruch 1, bei dem eine Vielzahl an Adsorptionszonen verwendet wird, wobei mindestens eine der Zonen Ammoniak aus dem ammoniakhaltigen Abgas adsorbiert, während mindestens eine der anderen Zonen gleichzeitig vom adsorbierten Ammoniak desorbiert wird und der daraus desorbierte Ammoniak anschließend durch eine Zersetzungszone geführt wird.

3. Verfahren nach Anspruch 2, bei welchem die Adsorptionszonen parallel zueinander mit dem Abgasstrom verbunden sind, wobei jede einzelne Adsorptionszone in regelmäßigen Abständen zum Zwecke der Desorption vom Abgasstrom getrennt wird.

4. Verfahren nach einem der Ansprüche 1 bis 3, bei welchem die Zersetzung des desorbierten Ammoniaks bei einer Temperatur von 300°C bis 400°C durchgeführt wird.

5. Verfahren nach einem der Ansprüche 1 bis 4, bei welchem die oder jede der Adsorptionszonen bis zum Punkt der Sättigung mit Ammoniak gebracht wird, bevor die Desorption durchgeführt wird.

## Revendications

1. Procédé de réduction du niveau d'ammoniac ou d'élimination de l'ammoniac du gaz d'échappement d'un processus de dénitration à sec qui intervient dans une zone de dénitration et qui utilise de l'ammoniac à une température élevée comme agent réducteur, comprenant
le contact du gaz d'échappement contenant de l'ammoniac à une température de 200°C ou moins dans une zone d'adsorption avec une matière adsorbant l'ammoniac pour ainsi adsorber l'ammoniac dans/sur la matière adsorbante,
la désorption de l'ammoniac adsorbé à partir de la matière adsorbant l'ammoniac à une température d'au moins 300°C, pour ainsi libérer l'ammoniac de la matière adsorbante, et
la décomposition de l'ammoniac libéré par contact de celui-ci avec un catalyseur de décomposition d'ammoniac dans une zone de décomposition distincte des zones de dénitration et d'adsorption.

2. Procédé selon la revendication 1, dans lequel une pluralité de zones d'adsorption sont utilisés, au moins l'une des zones adsorbant l'ammoniac à partir du gaz d'échappement contenant de l'ammoniac tandis qu'au moins une autre des zones est désorbée simultanément de l'ammoniac adsorbé et l'ammoniac désorbé qui en provient est passé par une zone de décomposition.

3. Procédé selon la revendication 2, dans lequel les zones d'adsorption sont connectées au courant de gaz d'échappement en parallèle les unes avec les autres, chaque zone d'adsorption étant périodiquement déconnectée du courant de gaz d'échappement aux fins de la désorption.

4. Procédé selon l'une quelconque des revendications 1 à 3, dans lequel la décomposition de l'ammoniac désorbé est effectuée à une température de 300°C à 400°C.

5. Procédé selon l'une quelconque des revendications 1 à 4, dans lequel la ou chaque zone d'adsorption est portée au point de saturation avec l'ammoniac avant d'effectuer la désorption.
